# EUROPÄISCHE PATENTSCHRIFT

(11) **EP 0 666 824 B1**
(45) Veröffentlichungstag und Bekanntmachung des Hinweises auf die Patenterteilung: **17.09.1997**
(21) Anmeldenummer: 93923566.9
(22) Anmeldetag: 28.10.1993
(51) Int. Cl.: B65D 83/00

(54) **EIN- UND MEHRWEGGEBINDE MIT EINLEGETEIL UND VERFAHREN ZU DESSEN ENTLEERUNG**
SINGLE AND MULTI-USE DRUM WITH INSERT AND METHOD FOR EMPTYING THE SAME
FUT UTILISABLE UNE OU PLUSIEURS FOIS, MUNI D'UNE PIECE D'INSERTION ET PROCEDE DE SA VIDANGE

(30) Priorität: 06.11.1992 DE 9215129 U
(43) Veröffentlichungstag der Anmeldung: 16.08.1995
(73) Patentinhaber: Henkel Teroson GmbH, 69123 Heidelberg (DE)
(72) Erfinder: GRAB, Hans, D-74933 Neidenstein (DE); PAPZIEN, Siegbert, D-41372 Niederkrüchten (DE)
(74) Vertreter: Mathes, Nikolaus
(86) Internationale Anmeldenummer: EP9302992
(87) Internationale Veröffentlichungsnummer: WO9411271

(56) Entgegenhaltungen:
- EP-A- 0 319 861
- EP-A- 0 363 307
- EP-A- 0 408 515
- EP-A- 0 413 049
- DE-U- 8 812 012
- FR-A- 600 732

## Beschreibung

Die vorliegende Erfindung betrifft mit pastösen und/oder hochviskosen Kleb-/Dichtstoffen befüllte großvolumige fassartige Ein- und/oder Mehrweggebinde und ein Verfahren zur Entleerung derartiger Gebinde unter Verwendung einer an sich bekannten Pumpe mit Druckfolgeplatte.

Kleb- und Dichtstoff werden für industrielle Großverbraucher in Fässern oder ähnlichen großvolumigen Behältern geliefert, die in der Regel aus Metall sind. Im Rahmen der immer stärker werdenden Auflagen des Umweltschutzes muss heute gewähleistet sein, dass derartige Verpackungen ganz oder zumindest teilweise wiederverwertet werden können. In der Regel werden Fässer und ähnliche Metallbehälter als Mehrweggebinde verwendet, d.h. nach Entleerung werden diese gereinigt und reconditioniert, um für gleiche oder ähnliche Verwendungszwecke wiederverwandt zu werden. Einweggebinde werden in der Regel zumindest stofflich wiederverwertet. Beide Fälle setzen voraus, dass die Gebinde so vollständig wie möglich entleert werden können. Bei pastösen oder sehr dickflüssigen Materialien, wie Kleb- und/oder Dichtstoffen ist dies jedoch häufig nur sehr schwierig zu realisieren. Im Normalfall werden diese Kleb- und/oder Dichtstoffe beim Endanwender mit Hilfe von Pumpen, die sogenannte Druckfolgeplatten haben, entleert. Diese Druckfolgeplatten drücken die Klebstoffe unter hohem Druck aus den Fässern, dabei ist es zwingend notwendig, daß die Druckfolgeplatte im Randbereich des zylindrischen Teils des Fasses sich dem Innendurchmesser des Fasses sehr exakt anpaßt. Dadurch ist normalerweise gewährleistet, daß die senkrechten Wandungen nach der Entleerung relativ sauber zurückbleiben. Ein kritischer Bereich ist jedoch der Bodenbereich des Fasses, bei normaler Entleerung verbleiben erhebliche Materialreste im Bodenbereich des Fasses.

Um diese Schwierigkeiten zu umgehen, ist es vielfach üblich, die Kleb- und/oder Dichtstoffe in sogenannte Innensäcke einzufüllen, die ihrerseites vor dem Befüllen in das Faß eingelegt wurden. Beispiele hierfür sind in der DE-A-2918707 oder der EP-A-0102484 zu finden. Für feuchtigkeitsempfindliche Materialien wurden auch als Innensäcke Verpackungsbeutel aus mehrlagigen Verbundfolien zum Einlegen in die Fässer vorgeschlagen, siehe z.B. DE-U-8812012.

Bei sehr zähfließenden, hochviskosen Kleb-/Dichtstoff Formulierungen führen derartige Innensäcke jedoch in der Regel zu Schwierigkeiten, da das Beutelmaterial in den Förderbereich des Rohres hineingerät und dadurch zu Schwierigkeiten bei der Förderung des Klebstoffes führt. Letzteres tritt insbesondere auf, wenn man aus Kostengründen gezwungen ist, sehr dünnwandige Verpackungsbeutel bzw. Innensäcke zu verwenden. Bei Kleb-/Dichtstoffen, die keine oder nur eine sehr geringe Empfindlichkeit gegen Luftfeuchtigkeit oder den Sauerstoff der Luft haben, ist es wünschenswert, die Verwendung von Innensäcken zu vermeiden, da diese den Befüllungsvorgang aufwendiger gestalten und somit zusätzlich zu den Materialkosten des Innensackes weitere Abfülllkosten und Entsorgungskosten beim Abfall verursachen.

Die FR-A-600732 beschreibt kommerzielle Gebinde für pastöse Materialien. Diese Gebinde enthalten einen beweglichen Zwischenboden, der entweder durch den Atmosphärendruck oder durch manuellen Druck auf den Zwischenboden in Richtung Entleerungsoffnung gedrückt wird. Dieser Zwischenboden drückt somit die in dem Gebinde befindliche pastöse Masse durch die Entleerungsöffnung und bewirkt somit eine Entleerung. Über eine Entleerung von großvolumigen, faßartigen Gebinden mit Hilfe von Pumpen mit Druckfolgeplatte, wobei ein Einlegeteil im Bodenbereich des Gebindes vorhanden ist, welches während des Entleerungsvorganges im Bodenbereich verbleibt, macht die FR-A-600732 keine Angaben. Außerdem werden in dieser Schrift keine Angaben über die Vollständigkeit der Entleerung des Gebindes gemacht.

Die EP-A-0413049 beschreibt eine Kartusche für Polyurethan-Dichtungsmaterialien. Diese Kartusche aus nicht metallischem Material besteht aus einem zylindrischen rohrförmigen Körper, dessen hinteres Ende durch einen Kolben aus Kunststoff abgeschlossen wird und dessen vorderer Deckelbereich integral mit dem zylindrischen rohrförmigen Körper geformt ist. Dieser Deckel hat im Zentrum seiner Stirnfläche einen die Entnahme des Material ermöglichenden Zapfen. Auf der Kartuscheninnenseite ist dieser Deckel mit einer dünnen Membran aus Polyethylenbeschichteten Aluminium versehen. Zur Entnahme des Kartuscheninhaltes wird Druck auf den Kolben ausgeübt, wobei die Membrane aufplatzt und so eine Entnahme des Polyurethandichtungsmaterials durch den Zapfen ermöglicht.

Aufgabe der vorliegenden Erfindung ist es, an sich bekannte Ein- und Mehrweggebinde so weiterzuentwickeln, dass nach dem Entleeren dieser Gebinde mit herkömmlichen, Druckfolgeplatten enthaltenden Fasspumpen nur noch minimale Reste des Kleb-/Dichtstoffes in den Fässern verbleibt, so dass auf zusätzliche Reinigungsmaßnahmen nach dem Entleeren der Fässer weitgehend verzichtet werden kann.

Gemäß Anspruch 1 wird diese Aufgabe dadurch in besonders einfacher Weise gelöst, dass im Bodenbereich des Gebindes ein Einlegeteil vorhanden ist, welches während des Entleerungsvorganges im Bodenbereich des Gebindes verbleibt. Anspruch 10 gibt ein mit pastösen und/oder hochviskosen Kleb-/Dichtstoffen befülltes großvolumiges fassartiges Ein- und/oder Mehrweggebinde zur Verwendung eines derartigen Verfahrens an.

Ein Ausführungsbeispiel der Erfindung wird nachfolgend anhand einer Zeichnung näher erläutert. Es zeigt:
- Figur 1: Einen Folienzuschnitt **1** in der Aufsicht
- Figur 2: Das komplette Einlegeteil bestehend aus kreisförmiger Scheibe und Folienzuschnitt mit umgelegten Laschen **2** und Randbereichen **3** in der Aufsicht
- Figur 3: Das mit dem Klebstoff **7** gefüllte Gebinde **6** mit dem aus Folienzuschnitt **1** und Scheibe **4** bestehenden Einlegeteil.

Vorzugsweise besteht das Einlegeteil aus einer kreisförmigen Scheibe **4**, die dem Innendurchmesser des Gebindes **6** angepasst ist, in der Regel ist der Durchmesser der Scheibe zwischen 0,5 und 2 mm kleiner als der Innendurchmesser des Gebindes. Die Scheibe hat eine Dicke von 0,1 bis 4 mm, vorzugsweise eine Dicke von 1 bis 3 mm und besteht aus einem wiederverwertbaren Material, vorzugsweise wird hierfür Pappe oder Polyethylen oder Polypropylen verwendet.

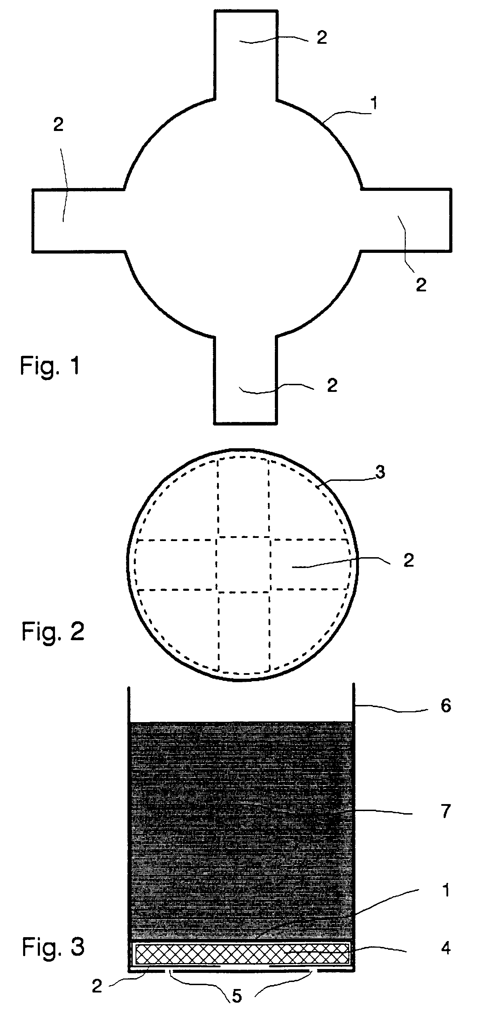

Diese Scheibe wird mit einem Folienzuschnitt **1** teilweise ummantelt. Dieser Folienzuschnitt ist entweder kreisförmig mit einem größeren Durchmesser als derjenige der Scheibe, vorzugsweise hat dieser Folienzuschnitt eine oder mehrere überstehende Laschen **2** wie in **Figur 1** dargestellt. Dieser Folienzuschnitt kann aus beschichtetem oder unbeschichtetem Papier, Polyolefinen, insbesondere Polyethylen oder Polypropylen oder anderen Kunststoffen, bestehen. Auch Aluminiumfolien oder Verbundfolien aus Aluminium und Kunststoffen sind hierfür geeignet. Die Folienstärke soll dabei zwischen 0,05 und 1 mm, vorzugsweise zwischen 0,1 und 0,5 mm liegen. Gegebenenfalls kann diese Folie einseitig mit einer Antihaftschicht versehen sein. Diese Antihaftschicht kann aus einer Beschichtung mit Polyfluorolefinen wie z.B. Polytetrafluorethylen, Silikonpolymeren oder Polyolefinen oder Wachs bestehen.

Die über den Durchmesser der Scheibe hinausragenden Bereiche **3** sowie die überstehenden Laschen **2** des Folienzuschnitts **1** werden gemäß **Figur 2** auf die Unterseite der Scheibe umgelegt und ggf. an der Unterseite fixiert. Diese Fixierung kann mit allen an sich bekannten Maßnahmen durchgeführt werden, d.h., es kann eine mechanische Fixierung oder ein Verkleben mit einem Haftklebstoff, einem Hot Melt oder ähnlichen Maßnahmen erfolgen.

Das so vorbereitete Einlegeteil aus Folienzuschnitt **1** und Scheibe **4** wird wie in **Figur 3** dargestellt, auf dem Boden des Ein- oder Mehrweggebindes **6** gelegt, anschließend wird dieses Gebinde mit dem Kleb-/Dichtstoff **7** in herkömmlicher Art befüllt.

Die Entleerung des Gebindes beim Verarbeiter des Kleb-/Dichtstoffes kann in üblicher Weise erfolgen, beim Gebindewechsel löst sich das Einlegeteil vom Gebindeboden, so daß eine Verschmutzung des Gebindebodens mit Kleb-/Dichtstoffresten verhindert wird. Nach dem Hochfahren der Druckfolgeplatte aus dem Gebinde befinden sich in der Regel erhebliche Mengen an Klebstoffresten festhaftend an der Unterseite der Druckfolgeplatte. An dieser haftet jetzt das Einlegeteil, das mit Hilfe der Laschen **2** nun sehr leicht von dieser Klebstoffschicht abgezogen werden kann.

Die Druckfolgeplatte kann nun ohne weitere Maßnahmen in ein nachfolgendes Faß eingeführt werden.

In vielen Fällen ist die Scheibe so wenig verschmutzt, daß sie nach Reinigung wieder verwertbar ist, so daß nur der Folienzuschnitt entsorgt werden muß.

Überraschenderweise hat sich gezeigt, daß Einweggebinde durch diese einfachen Maßnahmen mit erheblich weniger Aufwand entsorgt werden können bzw. der stofflichen Wiederverwertung zugeführt werden können. Bei Mehrweggebinden wird der zur Wiederbefüllung notwendige Reinigungsaufwand auf ein Minimum reduziert.

In einer besonderen Ausführungsform der Erfindung sind in dem Gebindeboden Entlüftungslöcher **5** angebracht, um das Herausfahren der Druckfolgeplatte der Förderpumpe (hier nicht dargestellt) zu erleichtern, da ein Unterdruck zwischen Gebindeboden und Druckförderplatte vermieden wird.

Durch die vorliegende Erfindung ist also ein Ein- und/oder Mehrweggebinde mit Einlegeteil geschaffen, das auf besonders kostengünstige Art die Handhabung von pastösen und/oder hochviskosen Kleb-/Dichtstoffen erleichtert und dabei den Erfordernissen des Umweltschutzes Rechnung trägt.

## Patentansprüche

1. Verfahren zur Entleerung von großvolumigen, faßartigen Ein- und /oder Mehrweggebinden unter Verwendung einer an sich bekannten Pumpe mit Druckfolgeplatte, dadurch gekennzeichnet, daß im Bodenbereich des Gebindes ein Einlegeteil vorhanden ist, welches während des Entleerungsvorganges im Bodenbereich des Gebindes verbleibt.

2. Verfahren nach Anspruch 1, dadurch gekennzeichnet, daß das Einlegeteil aus einer Scheibe (4) und einem Folienzuschnitt (1) besteht.

3. Verfahren nach Anspruch 1 oder 2, dadurch gekennzeichnet, daß der Durchmesser der Scheibe (4) an den Innendurchmesser des Gebindes (6) angepaßt ist, und das die Scheibe (4) aus einem wiederverwertbaren Material, insbesondere Pappe oder Polyethylen oder Polypropylen besteht.

4. Verfahren gemäß Anspruch 3, dadurch gekennzeichnet, daß die Scheibe eine Dicke von 0,1 bis 4 mm, vorzugsweise eine Dicke von 1 bis 3 mm hat.

5. Verfahren gemäß einem der Ansprüche 2 bis 4, dadurch gekennzeichnet, daß der Folienzuschnitt aus einer Kunststoffolie oder aus Papier mit einer Stärke von 0,05 bis 1 mm, vorzugsweise von 0,1 bis 0,5 mm besteht und gegebenenfalls einseitig mit einer Antihaftschicht versehen ist.

6. Verfahren gemäß Anspruch 5, dadurch gekennzeichnet, daß die Folie aus Polyolefinen wie z.B. Polyethylen, Polypropylen oder aus Polyestern oder aus Polyamid oder aus PVC besteht.

7. Verfahren gemäß Anspruch 5 oder 6, dadurch gekennzeichnet, daß die Folie einen kreisförmigen Zuschnitt hat mit einem Durchmesser, der größer als der der Scheibe ist und/oder eine oder mehrere überstehende Laschen (2) hat.

8. Verfahren gemäß Anspruch 7, dadurch gekennzeichnet, daß die über den Durchmesser der Scheibe hinausragenden Teile (3) bzw. Laschen (2) auf der Unterseite der Scheibe fixiert werden, vorzugsweise mit einem Haftklebstoff, einem Hotmelt oder mechanisch.

9. Verfahren gemäß einem der Ansprüche 1 bis 8, dadurch gekennzeichnet, daß der Boden des Gebindes Löcher (5) enthält.

10. Mit pastösen und/oder hochviskosen Kleb-/Dichtstoffen befülltes großvolumiges fassartiges Ein- und/oder Mehrweggebinde zur Verwendung für ein Verfahren gemäß mindestens einem der vorhergehenden Ansprüche, dadurch gekennzeichnet, dass seine obere Öffnung das Einführen einer Druckfolgeplatte ermöglicht, und im Bodenbereich des Gebindes ein Einlegeteil vorhanden ist, welches bis zum Ende des Entleerungsvorganges unverändert im Bodenbereich des Gebindes verbleibt.

## Claims

1. A process for emptying large-volume, drum-like disposable and/or returnable containers using a pump known per se with a pressure follower plate, characterized in that an insert is present at the base of the container and remains there during the emptying process.

2. A process as claimed in claim 1, characterized in that the insert consists of a disc (4) and a film blank (1).

3. A process as claimed in claim 1 or 2, characterized in that the diameter of the disc (4) corresponds to the internal diameter of the container (6) and in that the disc (4) consists of a recyclable material, more particularly cardboard or polyethylene or polypropylene.

4. A process as claimed in claim 3, characterized in that the disc has a thickness of 0.1 to 4 mm and preferably 1 to 3 mm.

5. A process as claimed in any of claims 2 to 4, characterized in that the film blank consists of a plastic film or of 0.05 to 1 mm thick and preferably 0.1 to 0.5 mm thick paper and is optionally coated on one side with an anti-adhesion layer.

6. A process as claimed in claim 5, characterized in that the film consists of polyolefins, such as for example polyethylene, polypropylene; of polyesters or of polyamide or of PVC.

7. A process as claimed in claim 5 or 6, characterized in that the film blank is circular with a larger diameter than the disc and/or comprises one or more projecting laps (2).

8. A process as claimed in claim 7, characterized in that the parts (3) and laps (2) projecting beyond the diameter of the disc are fixed to the underneath of the disc, preferably with a contact adhesive, a hotmelt or mechanically.

9. A process as claimed in any of claims 1 to 8, characterized in that holes (5) are formed in the base of the container.

10. A large-volume drum-like disposable and/or returnable container filled with paste-like and/or high-viscosity adhesives/sealants for use for the process claimed in at least one of the preceding claims, characterized in that its upper opening allows a pressure follower plate to be introduced and in that an insert is present at the base of the container and remains in place until the emptying process is complete.

## Revendications

1. Procédé de vidange de fûts à usage unique et/ou réutilisables de grand volume en utilisant une pompe connue à plateau pousseur,
caractérisé en ce qu'
est présente, dans le domaine de fond du fût, une pièce d'insertion qui reste dans le domaine de fond du fût pendant le processus de vidange.

2. Procédé selon la revendication 1,
caractérisé en ce que
la pièce d'insertion est constituée d'un disque (4) et d'une découpe de feuille (1).

3. Procédé selon la revendication 1 ou 2,
caractérisé en ce que
le diamètre du disque (4) est adapté au diamètre intérieur du fût (6) et que le disque (4) est en matériau réutilisable, notamment du carton ou du polyéthylène ou du polypropylène.

4. Procédé selon la revendication 3,
caractérisé en ce que
le disque a une épaisseur de 0,1 à 4 mm, de préférence une épaisseur de 1 à 3 mm.

5. Procédé selon l'une des revendications 2 à 4,
caractérisé en ce que
la découpe de feuille est en matière plastique ou en papier d'une épaisseur de 0,05 à 1 mm, de préférence de 0,1 à 0,5 mm et est munie le cas échéant d'un côté d'une couche auto-adhésive.

6. Procédé selon la revendication 5,
caractérisé en ce que
la feuille est en polyoléfines comme par exemple du polyéthylène, du polypropylène, ou en polyesters ou en polyamide ou en PVC.

7. Procédé selon la revendication 5 ou 6,
caractérisé en ce que
la feuille a une découpe en forme de cercle avec un diamètre qui est supérieur à celui du disque et a une ou plusieurs pattes (2) qui dépassent.

8. Procédé selon la revendication 7,
caractérisé en ce qu'
les parties (3) ou les pattes (2) qui dépassent du diamètre du disque sur la face inférieure du disque sont fixées, de préférence par une masse auto-adhésive, un adhésif thermofusible ou mécaniquement.

9. Procédé selon l'une des revendications 1 à 8,
caractérisé en ce que
le fond du fût présente des trous (5).

10. Fût à usage unique et/ou réutilisable de grand volume rempli de colles et de mastics pâteux et/ou très visqueux à utiliser dans un procédé selon au moins l'une des revendications précédentes,
caractérisé en ce que
son orifice supérieur permet d'introduire un plateau pousseur et que dans le domaine de fond se trouve une pièce d'insertion qui reste de manière inchangée dans le domaine de fond du fût jusqu'à la fin du processus de vidange.
